# EUROPEAN PATENT SPECIFICATION

(11) **EP 2 291 688 B1**
(45) Date of publication and mention of the grant of the patent: **23.11.2011**
(21) Application number: 09766113.6
(22) Date of filing: 16.06.2009
(51) Int. Cl.: G01V 11/00

(54) **FLOW LINE ELECTRIC IMPEDANCE GENERATION**
ERZEUGUNG VON ELEKTRISCHER IMPEDANZ IN EINER FÖRDERLEITUNG
GÉNÉRATION D'IMPÉDANCE ÉLECTRIQUE DANS UNE LIGNE DE LIAISON

(30) Priority: 18.06.2008 GB 0811223; 18.06.2008 GB 0811224
(43) Date of publication of application: 09.03.2011
(73) Proprietor: Expro North Sea Limited, Forbury Square Reading Berkshire RG1 3EU (GB)
(72) Inventor: HUDSON, Steven, Martin, Dorset DT10 1HQ (GB); BROMWICH, Robert, Charles, Dorset DT11 8HA (GB)
(74) Representative: Faulkner, Thomas John
(86) International application number: PCT/GB2009/001501
(87) International publication number: WO 2009/153552

(56) References cited:
- WO-A-01/65068
- US-A- 5 130 706
- US-A1- 2002 036 085
- US-A1- 2003 227 393
- US-B1- 6 469 635
- "SPE: GOVERNMENT, INDUSTRY UNVEIL NEW DRILL PIPE TELEMETRY TEST RESULTS" OIL AND GAS JOURNAL, PENNWELL, HOUSTON, TX, US, vol. 100, no. 47, 18 November 2002 (2002-11-18), page 38/39, XP001132969 ISSN: 0030-1388

## Description

This invention relates to flow line electrical impedance generation, in particular to devices for generating electrical impedance in flow lines and communication apparatus and systems for communicating in flow line structures where tubing portions of the flow line structure are used as part of a signal path.

The present methods and apparatus are of particular interest in the oil and gas industry where flow lines are used for transporting product (oil and/or gas) up out of wells and away from wells either along, for example, a sea bed or along the land surface. In each situation metallic tubing is provided through which the product flows, be this, for example, "casing", "lining", or "production tubing" down hole in a well or a "pipeline" along a seabed or the earth's surface. In this specification the word "tubing" is used to cover all such metallic tubing.

In various situations it can be desirable to provide an insulation joint between two lengths of tubing so that a first of the lengths of tubing is electrically isolated from a second of the lengths of tubing. As a particular example, there are various existing systems for communicating in flow line systems where the metallic structure of the flow line, that is to say the tubing, is used as a signal channel for carrying electrical signals. Such communication systems are useful in allowing the transmission of data from, for example, down hole in a well to the surface. Such data may relate to parameters which are measured in the well such as pressure and/or temperature.

Insulation joints can be used in such communication systems to provide a mechanism for applying signals onto the metallic structure within the well or extracting signals from within the metallic structure within the well. In particular some form of transmitter or receiver may be connected across the insulation joint.

An example of such a communication system using this type of mechanism to extract signals from and inject signals into a subsea oil pipeline installation is described in one of the inventor's earlier patents US 5587707.

Whilst transmitting or receiving signals across an insulation joint can work well in many circumstances there are situations where it is not possible to introduce an insulation joint into such tubing. It will be appreciated that in at least some circumstances there can be significant pressures or other loads which will be experienced by the tubing in flow lines used in the oil and gas industry and therefore the introduction of an insulation joint can be undesirable or impossible. The introduction of such a joint may degrade the structural integrity of the metallic tubing.

It is an aim of the present invention to provide a way to avoid the introduction of a physical insulation joint whilst still giving at least some of the functionality that may be given by a physical insulation joint.

US 2002/036085 and US2003/227393 both describe the provision of inductive chokes to create impedances in well tubing. These chokes can be used as low pass filters and/or to allow the extraction of power across the choke when "high" frequency signals are applied to the tubing.

According to the present invention there is provided flowline electrical impedance generation means for generating a local electrical impedance in a metallic tubing portion of a flowline as claimed in claim 1.

There may be a flow line arrangement comprising a metallic tubing portion and impedance generation means as defined above.

The impedance generation means may be arranged so as to not impair the structural integrity of the tubing with which it is used. The impedance generation means may be structurally distinct from the tubing with which it is used. The impedance generation means may be arranged to generate the local electrical impedance in the tubing without modifying the dimensions or materials of the tubing in that region.

The impedance generation means may be arranged so that tubing may run uninterruptedly through or past the impedance generation means when the apparatus is installed and in use.

The impedance generation means comprises a generally toroidal portion of magnetic material for surrounding the tubing portion with a winding provided on the toroidal portion of magnetic material. This allows the tubing portion to act as a single turn winding in a transformer also comprising the toroidal portion of magnetic material and said winding provided on the toroidal portion of magnetic material.

Here it is to be understood that word toroidal is used in a broad way to refer to any ring like shape that can encircle a length of tubing - it is not relevant what shape the ring adopts nor is it relevant what shape a cross-section through the material of the ring has.

The impedance component may comprise a capacitor connected in series with the winding.

According to another aspect of the present invention there is provided flowline communication apparatus for use where metallic tubing of a flowline system is used in a signal path, the apparatus comprising impedance generation means as defined above for generating a local electrical impedance in a metallic tubing portion and a communications unit comprising at least one of a transmitter for transmitting signals into the tubing portion across the local electrical impedance and a receiver for receiving signals across the local impedance from the tubing.

According to another aspect of the present invention them is provided a flowline communication arrangement comprising flowline communication apparatus as defined above and a length of tubing.

Preferably the impedance generation means is arranged to generate an impedance which is tuned or tuneable to the frequency of the signals to be transmitted and/or received across the local impedance. Here the idea of tuning the impedance relates to providing a maximum impedance at the signalling frequency to help in the application and/or extraction of signals across the impedance.

The flow line communication apparatus may comprise a control unit for controlling the impedance generation means to control the local electrical impedance. Where there is no communication apparatus, the impedance generation means may have an associated control unit. The impedance generation means may comprise a control unit. The control unit may be arranged to tune the impedance to the frequency of signals being sent and/or received. The control unit may be arranged to selectively enable and disable the impedance generation means to control whether a local electrical impedance is generated.

The impedance generation means may further comprise a plurality of impedance components which are selectively electrically connectable, for example under control of the control unit, with the winding to alter a resonant frequency of the system and hence tune the local electrical impedance. There may be a plurality of capacitors selectively connectable in series with the winding. The capacitors may be connected in parallel relative to each other. The capacitors may be connected such that each, or each of a subset of the capacitors, can be selectively and independently switched into series connection with the winding. The capacitors may be arranged in a ladder network.

The impedance generation means may comprise active and/or passive components.

The control unit may be arranged to measure one of: received signal strength from the tubing and the local electrical impedance in the tubing, and arranged to control the impedance generation means so that at the signalling frequency, the signal strength or impedance respectively tends towards a maximum.

The flowline communication apparatus may have a spaced pair of electrical contacts for contacting with tubing so as to connect the transmitter and/or receiver across the local impedance. The apparatus may have one electrical contact disposed on a first side of the toroidal portion of magnetic material and another electrical contact disposed on a second side of the toroidal portion of magnetic material.

The tubing may be used in the signal path as a transmission medium and/or as an antenna

Insulation may be provided on the outer surface of the tubing in regions on both sides of the impedance generating means. Where tubing on which the impedance generating means is mounted is itself provided within a second length of tubing, insulation may be provided between the two lengths of tubing in regions on both sides of the impedance generating means.

Typically the tubing will be downhole tubing or pipeline tubing as used in the oil and gas industry. Typically the tubing will be for carrying fluid, generally oil and/or gas.

The flowline communication apparatus may be used in communicating between metallic tubing in a main bore hole and metallic tubing in a lateral which is not electrically connected to the metallic tubing in the main bore. The communications apparatus may pick up signals transmitter through the formation in which the communications apparatus is disposed.

The flowline communication apparatus may be used as a relay station for both receiving signals from and transmitting signals into tubing.

The flowline communication apparatus may be used in drill stem testing.

The impedance generation means may be used to block or impede signals in a riser. The impedance generation means may be provided in a well installation including a communication system arranged to transmit signals at a predetermined frequency and having a riser leading away from a well head, the impedance generation means being disposed and arranged so as offer impedance to transmission of signals of said predetermined frequency from the well head into the riser. The impedance generation means may be disposed around the riser. The impedance generation means may be tuned to said predetermined frequency.

According to another aspect of the present invention there is provided a flowline power transmission apparatus set comprising a master unit arranged for applying power to metallic tubing of a flowline system and at least one other unit arranged to extract power from metallic tubing of a flowline system, the at least one other unit comprising an impedance generation means as defined above to generate an impedance across which power can be extracted in use.

The master unit may be a master communications unit.

The at least one other unit may be a communications unit. The communications unit may have one or more of the respective optional features defined above.

The master unit may be arranged to apply power signals having a predefined frequency. The master unit may be arranged to selectively apply power signals having one of a plurality of predefined frequencies.

The at least one other unit may be arranged to extract power only when a signal having a predefined frequency is detected at said other unit.

There may be a plurality of said other units each of which has an assigned predefined frequency and each being arranged to extract power only when a signal having the respective predefined frequency is detected at that unit.

The or each other unit may be arranged to activate the impedance generation means to allow the extraction of power under predetermined conditions. The predetermined conditions may be the detection of a signal having a respective predefined frequency.

The impedance generation means in the or each other unit may be tuned or tuneable to said respective predefined frequency, so as to provide high impedance to signals having that frequency.

The master unit may comprise power generation means. The power generation means may comprise a turbine. The master unit may comprise impedance generation means for generating an impedance across which power can be applied in use.

According to another aspect of the invention there is provided a flowline power transmission system comprising a flowline power transmission apparatus set as defined above and a flowline on which the apparatus set is installed.

The flowline may comprise a horizontal completion in an oil and/or gas well.

According to another aspect of the present invention there is provided flowline communication apparatus for use where metallic tubing of a flowline system is used in a signal path, the apparatus comprising a toroidal portion of magnetic material for location around a length of metallic tubing and a winding wound around the toroidal portion of magnetic material and connected to at least one impedance component chosen so that an impedance seen in a metallic tubing portion passing through the toroidal portion of magnetic material varies with frequency and a communications unit comprising at least one of a transmitter for transmitting signals into the length of metallic tubing across a portion of the tubing passing through the toroidal portion of magnetic material and a receiver for receiving signals, from the length of metallic tubing, across a portion of the tubing passing through the toroidal portion of magnetic material.

According to another aspect of the present invention there is provided a flowline communication system comprising a length of tubing and flowline communication apparatus as defined above with the communications unit disposed for transmitting signals into the tubing and/or receiving signals from the tubing at a first location and comprising another communications means for transmitting signals into the tubing and/or receiving signals from the tubing at a second location.

According to another aspect of the present invention there is provided a well installation comprising metallic structure including a length of tubing and flowline impedance generation means as defined above.

According to another aspect of the present invention there is provided a downhole communication system for communicating between metallic tubing in a main bore hole and metallic tubing in a lateral bore hole which is not electrically connected to the metallic tubing in the main bore, comprising transmitting means for applying signals to the metallic tubing in the main bore so that signals pass into the surrounding formation and towards the lateral bore and flowline communication apparatus as defined above provided in the lateral bore for extracting signals from the tubing in the lateral bore, the signals in the tubing in the lateral bore having been generated by the signals passing through the surrounding formation.

According to another aspect of the present invention there is provided a drill stem testing system comprising, a length of metallic tubing supporting a drill bit , a downhole sensor for sensing a downhole parameter, and a communication system for transmitting data from the downhole sensor to the surface, the communication system comprising flowline communication apparatus as defined above for injecting signals representing said data into the drill supporting metallic tubing for transmission towards the surface.

Embodiments of the present invention will now be described, by way of example only, with reference to the accompanying drawings in which:
Figure 1 schematically shows a well installation including a lateral bore and a communication system for communicating between the main bore and the lateral bore;
Figure 2 schematically shows part of the communication system of the well installation shown in Figure 1; and
Figure 3 shows part of the arrangement shown in Figure 2 in a schematic circuit diagram form;
Figure 4 shows one particular implementation of the circuit components shown in Figure 3;
Figure 5 shows another particular implementation of the circuit components shown in Figure 3;
Figure 6 shows a drill testing system comprising a communication system;
Figure 7 schematically shows a subsea well installation with a communication system;
Figure 8 schematically shows another well with a communication system; and
Figure 9 shows a communications unit of the system shown in Figure 8.

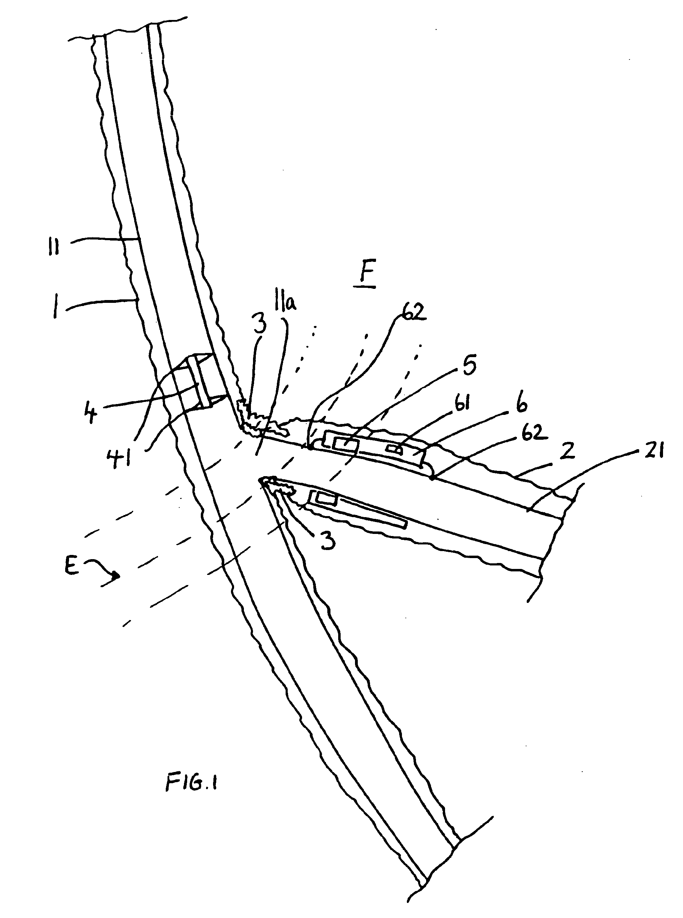

Figure 1 schematically shows a well installation which well has a main bore 1 and a lateral bore 2. As is well known in the oil and gas industry when a well is drilled, holes are drilled into the formation and these are lined with metallic tubing in one form or another to form a flow line through which product from the well may pass up the well to the surface.

The metallic tubing provided within the well may take various forms. It may for example, be an outer casing and within it an inner production tubing or drill stem tubing. In other circumstances there may simply be a liner tubing which is provided in the bore hole with no further tubing within it. All of these different possible configurations might be used with the ideas of the present invention and the details of such configurations is not of particular interest in the present application. The present invention is of interest in any of these situations where there is metallic tubing be that "casing", "lining", "production tubing", "drill stem tubing" or so on. Thus, whilst the word "tubing" can sometimes have a special meaning within the oil and gas industry, within this specification it is used generically to refer to any tubular like length of metallic material.

In the well installation shown in Figure 1, tubing in the form of a casing 11 is provided in the main bore hole 1 and tubing in the form of a liner 21 is provided in the lateral bore 2. Where the lateral bore 2 joins into the main bore hole 1, there is an opening or breakout in the casing 11 of the main bore 1. This opening is, of course, there to allow product from the lateral liner 21 to pass into the casing 11 for upwards transport to the surface. In the present case and in general, there is no metal to metal contact between the casing 11 in the main bore hole and the liner 21 in the lateral. Rather the flow path for the product is completed by cementing in the end of the liner 21 in the region where it meets the casing 11. Such portions of cement 3 are schematically shown in Figure 1.

Thus there is a continuous conduit for product to flow from the lateral bore 2 into the main bore 1, i.e. within the liner 21 and casing 11, but there is no metal to metal contact between the liner 21 and the casing 11. Thus, there is no ready path for electrical signals between the liner 21 and casing 11. This can present difficulties when using communication systems which rely on the transmission of electrical signals through the metallic structure of the well. This is because there may be a desire to transmit signals between equipment located in the lateral bore 2 and equipment located in the main bore 1 and/or the surface.

A potential solution to this problem is to look to detect signals passing out into the formation F surrounding the bore holes due to signals being transmitted into the metallic structure 11, 21. In this example, we considered a case where signals are injected into the casing 11 at a region near where the lateral bore 2 joins the main bore 1 and from there (amongst other things) propagate out into the formation F.

In the installation shown in Figure 1, a downhole communication tool 4 is provided in the casing 11 at a location near to where the lateral bore 2 joins the main bore 1. This downhole communication tool 4 is arranged for applying high current, very low frequency, signals into the casing 11 via spaced contacts 41. Such downhole tools are commercially available from the Applicant. In a normal mode of operation, such a tool is used to inject high current, very low frequency, signals into the metallic structure 11 from where they propagate along the metallic structure to another location where they may be detected by a similar tool or at the surface. However, as this process occurs, electro-magnetic signals E (which are only highly schematically represented in the drawings) will also travel away from the tool 4 into the formation F surrounding the tool 4. (Of course, other techniques may be used to inject signals into the formation F in the region of the meeting point between the main bore 1 and the natural bore 2.) This brings another possibility of using the portion of the liner 21 close to the main bore 1 as an antenna for picking up these signals.

A natural way to do this would be to introduce an insulation joint in the length of tubing 21 near the main bore 1 so that there are two portions of metallic tubing which are electrically insulated/isolated from one another. In such a circumstance a receiver (or a transmitter) may be connected across the insulation joint to allow the reception (or transmission) of signals. However, this is a circumstance where including an insulation joint in the tubing is highly undesirable or impossible. This is due to the high loads which will be exerted on the tubing 21 as it is pushed into the lateral bore 2 to form the liner 21.

In the present communication system as shown in Figure 1 rather than including an insulation joint in the liner 21, flow line impedance generation means 5 is provided for generating a local electrical impedance in the liner 21. which is much higher than the impedance of the tubing alone. This gives rise to the possibility of receiving signals across this local electrical impedance created in the liner 21 (and also transmitting signals across that impedance).

In the present communications system, a communications unit 6 is provided which comprises the flow line impedance generation means 5 and a transceiver 61 for transmitting and receiving signals across the impedance which can be generated by the impedance generating means 5. The communication unit 6 also comprises spaced contacts 62 for contacting with the metallic tubing 21 on either side of the impedance generating means 5 and thus on either side of the local impedance generated by the impedance generating means 5 in use.

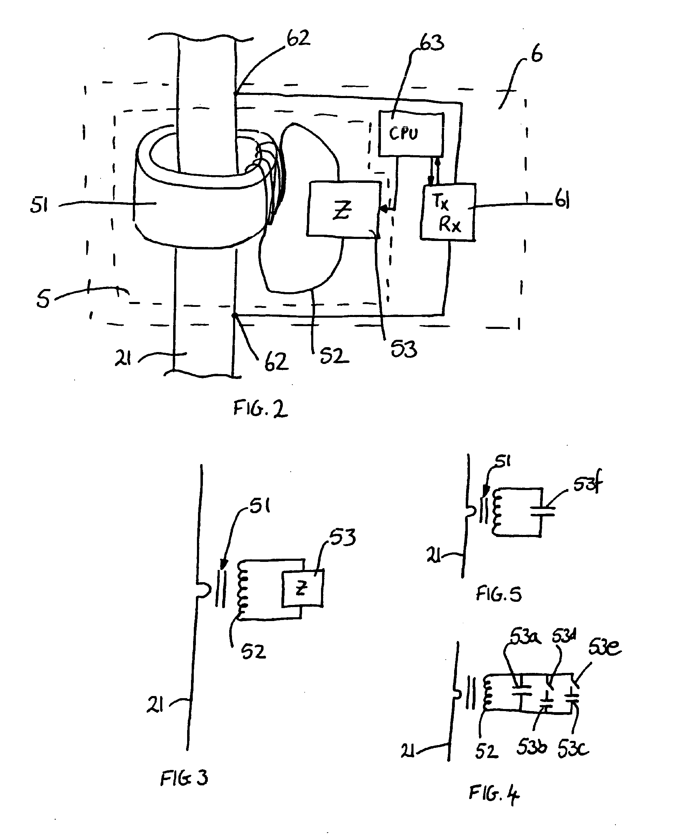

Figure 2 schematically shows the communication unit 6 in more detail. In the present embodiment the transceiver 61 and impedance generation means 5 are controlled by a control unit 63. This control unit 63 is used in the present embodiment to control the transmission and reception of signals from and to the communication unit and might for example, also receive data from local sensors to be included in messages to be transmitted.

Further, in the present embodiment the control unit 63 controls the behaviour of the impedance generation means 5. In particular, it is arranged to control the frequency at which the impedance generated by the impedance generation means is maximum. This is done so that the local electrical impedance generated by the impedance generation means 5 is most effective at the frequency of the signals which are to be transmitted and/or received.

During reception of signals, maximisation of the signals received may be achieved by monitoring the received signal strength, varying the characteristics of the impedance generation means 5 across a range and choosing the characteristics of the impedance generation means 5 which give rise to the largest received signal strength. As an alternative, the characteristics of the impedance generation means 5 may be directly controlled in response to a known or determined frequency of the signals to be transmitted/received. As a yet further alternative, the impedance actually generated in the portion of tubing passing through the impedance generation means 5 might be measured and the characteristics of the impedance generation means 5 varied until this value is maximised.

It should also be said that in other alternatives the impedance generation means 5 may not have this element of control and rather just be designed and arranged to give a maximum impedance at a pre-chosen frequency. To put this another way, it is possible to either have the impedance generation means 5 pre-tuned to give its best effect at a pre-chosen frequency or it is possible to have the impedance generation means 5 "tuneable" so that it may be actively "tuned" in use.

In the present embodiment, the impedance generation means 5 comprises a toroidal portion of magnetic material 51 which is located around the tubing 21 in which the impedance is to be generated. In practice this portion of magnetic material 51 may have any shape which is suitable for surrounding the tubing 21. It is shown only in highly schematic form in Figure 2. There is no requirement for the portion of magnetic material 51 to have an overall circular shape or to have any particular cross section. Moreover, the toroidal portion of magnetic material 51 may be originally two half annular pieces of material which are joined together around the tubing 21 or any other number of pieces which are joined together around the tubing 21.

Furthermore, there may in fact be a multiple number of toroidal pieces of magnetic material which are arranged axially next to one another along the tubing 21.

In this embodiment a multi-turn winding 52 is wound around the portion of magnetic material 51 and connected in series with at least one impedance component 53. With this arrangement the winding 52, magnetic material 51 and tubing portion 21 passing through the magnetic material portion 51 act as a transformer with the tubing 21 acting as a single turn.

Whilst the winding 52 could have a single turn as well, it is generally found beneficial for this to be a multi-turn winding in the present preferred uses, where very low frequencies are to be used for transmission and reception. This is because the impedance components 53 used to allow generation of impedance in the tubing portion 21 will typically comprise capacitors and the capacitance value of these capacitors necessary to tune the impedance generation means 5 to the required frequency will be smaller where a multi-turn winding 52 is used.

Figure 3 schematically shows, in circuit diagram form, the impedance generation means 5 and the transformer like arrangement between the tubing portion 21 and the impedance components 53.

Figure 4 schematically shows in circuit diagram form more detail of the impedance generation means 5 of the present embodiment where the impedance generation means 5 is tuneable. Here the impedance components 53 comprise three capacitors 53a, 53b and 53c which are arranged in parallel with one another and are connected to the winding 52. A first of the capacitors 53 is connected in series with the winding 52 and is so connected at all times. On the other hand the other two capacitors 53b, 53c are connectable in parallel across the first capacitor 53a, but such connection is controlled by respective switches 53d, 53e. Thus the impedance generation means 5 is tuneable by the control unit 63 selectively operating the switches 53d, 53e to switch the second and third capacitors 53b, 53c into and out of the circuit.

Such an arrangement may be used where it is known that a number of predetermined different frequencies will be used for transmission at different times or to allow tuning to obtain the best possible signal in a particular implementation at a particular time. Of course, in reality, a larger number of capacitive elements may be provided as part of the impedance components 53 to give more granular control. Furthermore, rather than using purely passive components, active components can be used to provide similar effects as part of the impedance components 53 in the impedance generation means 5.

It will be appreciated that here what is being done is that the impedance generation means 5 is being used in place of an insulation joint to provide a block or at least significant impedance against signals passing from one portion of the tubing 21 to the other portion of the tubing 21. Of course, in practical terms, using such an impedance generation means 5, it is unlikely to be possible to completely block the signal path between the two portions of tubing 21 on either side of the impedance generation means 51. However, such a complete block is not necessary to give useful results. For example, in the present embodiment a significant enough impedance may be generated in the tubing 21 to allow the sending and receiving of signals.

It will be appreciated that in the bulk metal tubing of the type used in the oil and gas industry then the impedance of a length of tubing will be extremely low. Thus, the impedance which is generated by the impedance generation means may, in absolute terms, be quite low, but still be effective. For example, a signalling circuit in these type of techniques where the metallic flow line is used as a signal channel may have a circuit of impedance of in the order of 5 miilliOhms. It has been found that an impedance generation means 5 of the type generally described with respect to Figure 2 can generate an impedance in the order of 50 milliOhms in the tubing in the region of the impedance generation means. This then is massively higher than the impedance of the same length of tubing 21 without the impedance generation means 5 in place.

It may also be appreciated that even without the windings 52, or impedance components 51, the presence of a piece of magnetic material 51 around the tubing 21 would cause some impedance in the tubing 21. However, this impedance at the low frequencies generally being used to transmit in such systems is generally too small to be useful. The inclusion of suitable impedance components, for example, even a single (correctly chosen) capacitor in series with suitable windings 52 on the magnetic material 51 can dramatically transform the impedance generated at the tuned frequency. Of course, away from the tuned frequency the impedance generated may be of no practical use, but this does not matter in a wide number of circumstances.

Figure 5 schematically shows, in circuit diagram form, a simple form of impedance generation means 5 where the impedance component 53 is a single capacitor 53f of a carefully chosen capacitance value to match the frequency of signals which are to be obstructed by the impedance generation means 5.

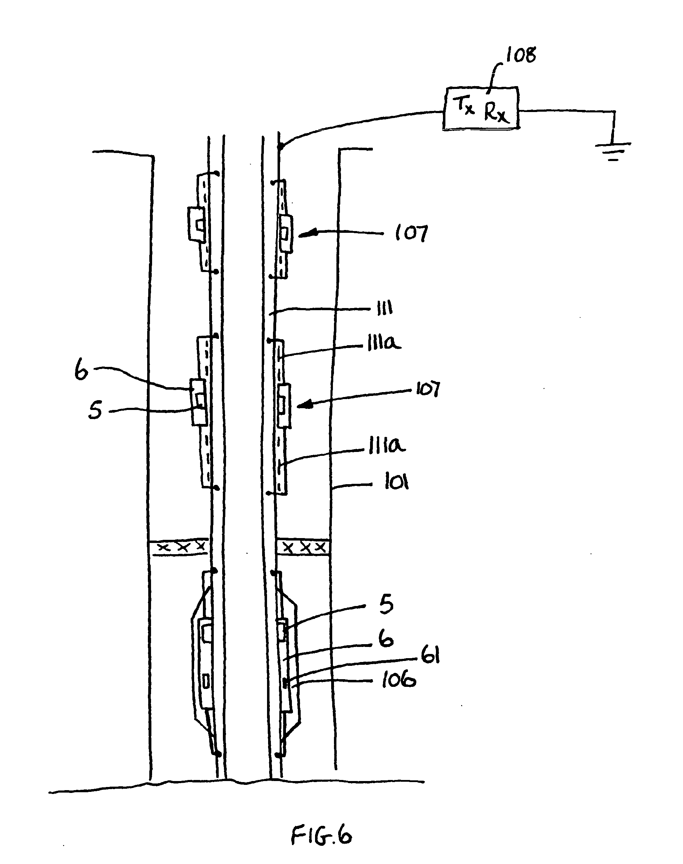

Figure 6 schematically shows a drill stem testing system where data concerning well parameters, for example, pressure are to be transmitted from downhole to the surface. Here drill stem tubing 111 is provided in a main bore 101. A downhole mandrel tool 106 is provided for collecting data readings concerning, for example, pressure and transmitting this data towards the surface. The downhole mandrel tool 106 comprises a communications unit 6 of the same general type of that described above with reference to Figures 1 to 5. Thus again, an impedance generation means 5 is provided for generating a local electrical impedance in the drill stem tubing 111 and a transceiver 61 is provided for transmitting and receiving signals into and from the drill stem tubing 111 across the local impedance generated by the impedance generation means 5. When transmitting these signals are injected into the drill stem tubing 111 and travel up towards the surface.

However, in this circumstance due to the achievable signal strength, repeater stations 107 are provided at locations along the drill stem tubing 111 to receive the signals in the drill stem tubing 111, amplify these and reapply them for onwards transmission.

Each repeater station 107 comprises a communications unit 6 of a similar type to that described above. Here, however, in order to increase the effectiveness of the reception and signalling capabilities, a length of the drill stem tubing 111 is provided with an outer insulating coating 111a for a region along either side of the impedance generation means 5 and electrical contact to the drill stem tubing 111 for the application and the reception of signals is made at the remote ends of these insulated portions.

A surface transceiver 108 is provided for receiving the signals transmitted by the downhole mandrel tool 106 after having been passed up the drill stem 111 via the repeating stations 107. The surface transceiver 108 has one terminal connected to the drill stem tubing 111 and another terminal connected to ground.

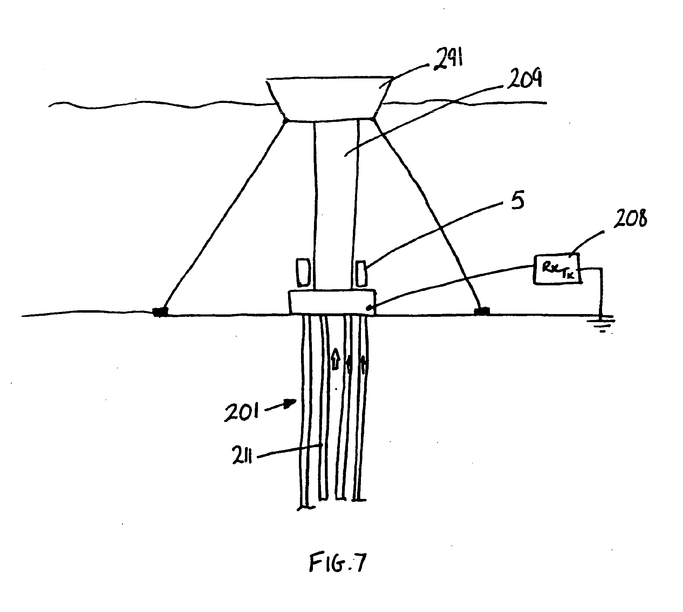

Figure 7 shows another situation where a impedance generation means 5 of the type described above with reference to Figures 2 to 5 may be used. Here there is a subsea well 201 including a communications system in which signals from downhole are transmitted towards the surface along the metallic structure 211 of the well 201. These signals are detected at the seabed by a seabed transceiver 208 which has one connection to the metallic structure 211 of the well head/tubing near the surface and one connection to earth. In isolation such a communication system has been proven to work well.

However, this is a subsea well 201 where there is a metallic riser 209 leading to a tethered vessel 291 at the surface. This metallic riser 209 is provided to transport the extracted product to the surface of the water at the tethered vessel 291 and, together, the tethered vessel 291 and riser 209 have to accommodate for changes in water level. At least partly because of this, the riser 209 is generally a massive metal component. It may have a wall thickness of three or four inches. This has the result that signals in this riser 209, for example, environmental noise can significantly effect the reception and transmission of signals between the well 201 (and associated communication tools downhole) and the sub-surface receiver 208. Electrically isolating the riser 209 from the well head would help to alleviate this problem. However, this again is a circumstance where the provision of a physical insulation joint is impractical.

Thus, in the present embodiment an impedance generation means 5 of the same general type described above with reference to Figures 2 to 5 is provided around the riser 209. This impedance generation means 5 can be tuned to block, or at least significantly attenuate, signals having frequencies which may interfere with the well communication system. The impedance generation means 5 might be tuned to block signals having a frequency where there is most noise or alternatively, may be tuned to block the signals having frequencies which correspond to transmission frequencies used in the well communication system. The impedance generation means 5 for use in such a situation would most likely but not necessarily be statically tuned rather than "tuneable".

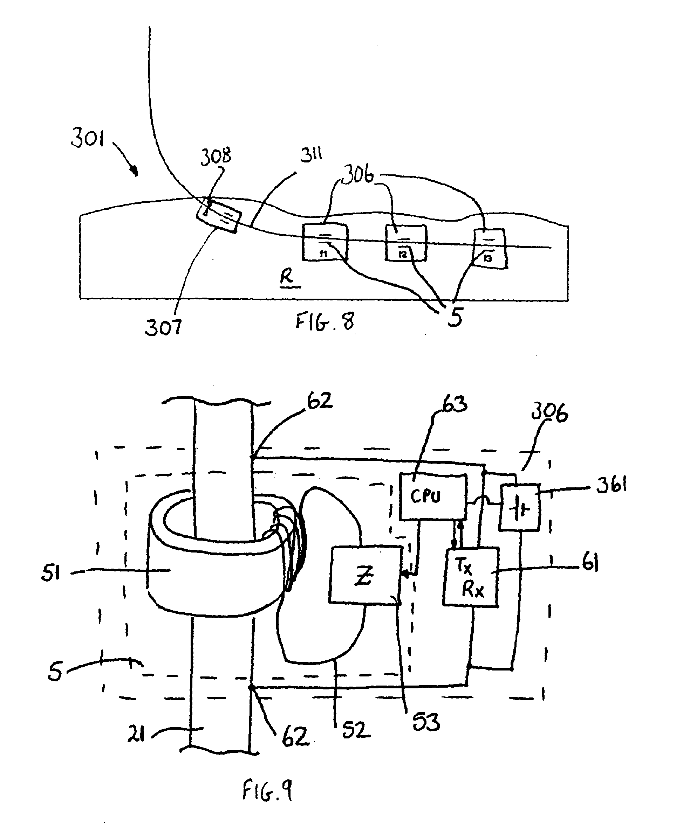

Figure 8 shows a further situation where impedance generation means 5 of the type described above with reference to Figures 2 to 5 may be used. Here there is a well having a horizontal completion 301 and including a communications system in which signals are transmitted along tubing 311 of the completion

The present well also includes a power transmission system for transmitting power from one location on the tubing 311 to others. The power may be used for operating the communications system and/or for other purposes.

A plurality of communications units 306 one of which is shown in Figure 9 and each of which is similar to that described with reference to Figures 1 to 5 are provided at selected locations in the well installation. For the sake of brevity no detailed description of the structure of each communications unit 306 is given here - however it is noted that most aspects of the structure and operation of the communications units 306 are the same as that of the communications unit 6 shown in and described with reference to Figure 2. The following description will rely on the description of the communications unit 6 above where the structure and operation are the same and make use of the same reference numerals to refer to the corresponding parts of the present communications units 306 and concentrate on the differences.

Each of the communications units 306 comprises an impedance generation means 5 of the type described above to facilitate the application of and/or extraction of signals to and/or from the tubing 311. In this embodiment the locations for the communications units 306 are selected to be ones where it is desired to take measurements of pressure and/or temperature. In general terms the communications units 306 may be located wherever it is on the tubing 311 that there is a desire for data communication - this may be, for example, to monitor a parameter or to remotely control an item.

A master communications unit 307 is disposed on the tubing 311 at a location spaced from the communications units 306. The master communications unit 307 is similar to the communications units 306 but also comprises power generation means 308 for generating power which may be used by the communications system.

Significant power can be required for signalling and/or other operations and providing power at downhole locations is always an issue. The present system aids in this by the provision of what might be termed an integral power transmission system.

In the present embodiment the power generation means 308 comprises a turbine which is driven by flow of product (i.e. oil and/or gas) in the tubing 311. Such a device is preferably located in a region of high flow rate. Furthermore, the provision of such a device to extract energy from the flow of product is likely to be intrusive - for example it may be a hindrance to access to the well by wireline. Thus it is desirable to minimise such interference to normal operating of the well by minimising the number of locations at which a power generation means is located.

In the present embodiment there is a single power generation means 308 provided at the master communications unit 307 and power is fed from there along the tubing 311 to the other communications units 306 as will be described below.

This power transmission system is particularly useful in a well with a horizontal completion as this generally means that there is a significant length of tubing passing through the reservoir R where there is often relatively high resistivity, and power may be efficiently transmitted along that length of tubing.

In the present embodiment each of the communications units 306 has its own power source 361 - this may include a back up battery and a rechargeable charge storage unit or just comprise a rechargeable charge storage unit - eg a rechargeable battery, or capacitor based device. However each communications unit 306 is arranged to harvest power from the tubing 311 which is transmitted by the master communications unit 307 to charge this device 361 and perform its main functions.

Each of the communications units 306 has a impedance generation means 5 tuned to generate a high impedance at a selected respective frequency - in this embodiment there are three frequencies f₁, f₂, f₃. Furthermore, the master communications unit 307 is arranged to selectively apply power signals to the tubing 311 at these three frequencies f₁, f₂, f₃.

The control unit 63 in each communications unit 306 is arranged to periodically monitor signals on the tubing 311.

In the absence of a signal having the frequency f₁, f₂, or f₃ assigned to that communications unit 306, the control unit 36 maintains a break in the circuit of the winding 52 and impedance means 53 so that the impedance generation means 5 is non-resonant (i.e. just resistive) such that any power signals on the tubing 311 will pass substantially unimpeded.

However, on detection of a signal having the frequency f₁, f₂, or f₃ assigned to that communications unit 306, the control unit 36 makes the circuit between the winding 52 and impedance means 53 so that the impedance generation means 5 is resonant and offers high impedance to the transmitted signal such that power may be extracted across the impedance generation means 5 by the communications unit 6.

The harvested energy may be then used in making measurements and/or signalling.

The control unit 36 may be arranged to send a signal back to the master communications unit 307 when its power requirements have been satisfied.

In an alternative rather than signals being transmitted at different frequencies for each communications unit 306, a different mechanism may be used to control whether a particular communications unit 306 should be harvesting power. For example each communications unit 306 may extract power at a chosen time, in response to a chosen signal (e.g. an address), on detecting that no other unit is extracting power or so on.

The master communications unit 307 may apply signals to and/or extract signals from the tubing 311 across an impedance generation means 5, or in a different way - for example across a conventional insulation joint.

Further it should be noted that a similar, but in most circumstances less preferred, power transmission system might be implemented without the use of any impedance generation means 5. That is to say in an alternative there may be a master communications unit 307 that transmits power along the tubing 311 which is selectively available to a plurality of communications units 306 and one of the above techniques used to decide whether this power can be harvested by a particular communications unit 306. Once such a determination is made, that communications unit 306 may connect in to extract the power. For this purpose each communications unit may be located at a conventional insulation joint which is usually electrically by-passed but can be put in to operation by the respective communications unit 306, when it is desired to signal and/or extract power.

It will be appreciated that the flow line impedance generation means described above are arranged as resonant devices.

As mentioned above the impedance generation means may be arranged to be tuned or tuneable to particular frequencies. Another way of expressing this is to say that the impedance generation means may be arranged to resonate at a predetermined or a selectively variable frequency. In, for example, Figure 3 the winding 52 and impedance components 53 form a resonant circuit.

## Claims

1. Flowline electrical impedance generation means (5) for electromagnetically generating a local electrical impedance in a metallic tubing portion (2) of a flowline, **characterised in that** the impedance generation means is tuned or tuneable to generate a maximum impedance to signals at a chosen frequency, and comprises a generally toroidal portion of magnetic material (51) for surrounding the tubing portion, a winding (52) being provided on the toroidal portion of magnetic material, and the winding being connected to at least one impedance component (53) which is chosen so that the impedance seen in a tubing portion passing through the toroidal portion of magnetic material (51) varies with frequency.

2. Flowline electrical impedance generation means according to claim 1 in which the impedance component (53) comprises a capacitor connected in series with the winding.

3. Flowline electrical impedance generation means according to claim 2, in which the impedance generation means comprises a plurality of impedance components (53b, 53c) which are selectively electrically connectable with the winding to alter a resonant frequency of the system and hence tune the local electrical impedance.

4. Flowline electrical impedance generation means according to claim 1 which is arranged to be mounted on the tubing portion (21) such that tubing may run uninterruptedly through or past the impedance generation means (5) when installed and in use.

5. Flowline electrical impedance generation means according to any preceding claim which comprises a control unit (63) for controlling the generation of the local electrical impedance.

6. Flowline communication apparatus for use where metallic tubing of a flowline system is used in a signal path, the apparatus comprising impedance generation means (5) according to any of claims 1 to 5 for generating a local electrical impedance in a metallic tubing portion (21) and a communications unit (6) comprising at least one of a transmitter for transmitting signals into the tubing portion across the local electrical impedance and a receiver for receiving signals across the local impedance from the tubing.

7. Flowline communication apparatus according to claim 6, which comprises a control unit (63) for controlling the impedance generation means to control the local electrical impedance.

8. Flowline electrical impedance generation means according to claim 5 or flowline communication apparatus according to claim 7, in which the control unit (63) is arranged to tune the impedance to the frequency of signals being sent and/or received.

9. Flowline electrical impedance generation means according to claim 5 or flowline communication apparatus according to claim 7, in which the control unit (63) is arranged to selectively enable and disable the impedance generation means (5) to control whether a local electrical impedance is generated.

10. Flowline communication apparatus according to claim 9 in which the impedance generation means (5) is arranged to generate an impedance which is tuned or tuneable to the frequency of the signals to be transmitted and/or received across the local impedance.

11. Flowline communication apparatus according to any one of claims 7 to 10, in which the control unit (63) is arranged to measure one of: received signal strength from the tubing and the local electrical impedance in the tubing, and arranged to control the impedance generation means (5) so that at the signalling frequency, the signal strength or impedance respectively tends towards a maximum.

12. Flowline communication apparatus according to any one of claims 6 to 11 comprising a spaced pair of electrical contacts (62) for contacting with tubing so as to connect the transmitter and/or receiver across the local impedance.

13. A flowline arrangement comprising a metallic tubing portion and impedance generation means (5) as claimed in any one of claims 1 to 5, 8 and 9.

14. A flowline communication arrangement comprising flowline communication apparatus as claimed in any one of claims 6 to 12 and a length of tubing.

15. A flowline arrangement according to claim 13 or a flowline communication arrangement according to claim 14, in which the impedance generating means (5) is mounted on or around tubing, and insulation (111a) is provided on the outer surface of the tubing in regions on both sides of the impedance generating means (5) or where the tubing on which the impedance generating means is mounted is itself provided within a second length of tubing, insulation is provided between the two lengths of tubing in regions on both sides of the impedance generating means.

16. A flowline communication arrangement according to claim 14 or claim 15 disposed for communicating between metallic tubing in a main bore hole and metallic tubing in a lateral which is not electrically connected to the metallic tubing in the main bore.

17. A flowline communication arrangement according to claim 14 or claim 15 disposed for use in drill stem testing.

18. A flowline arrangement according to claim 13, in which the impedance generation means (5) is provided in a well installation including a communication system arranged to transmit signals at a predetermined frequency and having a riser leading away from a well head, the impedance generation means being disposed around the riser.

19. A flowline power transmission apparatus set comprising a master unit (307) arranged for applying power to metallic tubing of a flowline system and at least one other unit (306) arranged to extract power from metallic tubing of a flowline system, the at least one other unit comprising an impedance generation means according to any one of claims 1 to 5, 8 and 9, to generate an impedance across which power can be extracted in use.

20. A flowline power transmission apparatus according to claim 19 in which the master unit (307) is arranged to selectively apply power signals having one of a plurality of predefined frequencies.

21. A flowline power transmission apparatus according to claim 20 in which there is a plurality of said other units (307) each of which has an assigned predefined frequency and each being arranged to extract power only when a signal having the respective predefined frequency is detected at that unit.

22. A flowline power transmission apparatus according to claim 20 in which each other unit is arranged to activate the impedance generation means to allow the extraction of power on detection of a signal having a respective predefined frequency.

23. A flowline power transmission apparatus according to any one of claims 19 to 22, in which the master unit (307) comprises power generation means (308).

24. A flowline power transmission system comprising a flowline power transmission apparatus set according to any one of claims 19 to 23 and a flowline on which the apparatus set is installed.

25. Flowline communication apparatus for use where metallic tubing of a flowline system is used in a signal path, the apparatus comprising a flowline electrical impedance generation means (5) according to claim 1 and a communications unit (6) comprising at least one of a transmitter for transmitting signals into the length of metallic tubing across a portion of the tubing passing through the toroidal portion of magnetic material and a receiver for receiving signals, from the length of metallic tubing, across a portion of the tubing passing through the toroidal portion of magnetic material.

26. A downhole communication system for communicating between metallic tubing in a main bore hole and metallic tubing in a lateral bore hole which is not electrically connected to the metallic tubing in the main bore, comprising transmitting means (4) for applying signals to the metallic tubing in the main bore so that signals pass into the surrounding formation and towards the lateral bore and flowline communication apparatus (6) according to claim 25 provided in the lateral bore for extracting signals from the tubing in the lateral bore, the signals in the tubing in the lateral bore having been generated by the signals passing through the surrounding formation.

27. A drill stem testing system comprising, a length of metallic tubing supporting a drill bit, a downhole sensor for sensing a downhole parameter, and a communication system for transmitting data from the downhole sensor to the surface, the communication system comprising flowline communication apparatus (6) according to claim 25 for injecting signals representing said data into the drill supporting metallic tubing (111) for transmission towards the surface.

## Patentansprüche

1. Erzeugungsmittel (5) von elektrischer Impedanz in einer Förderleitung zum elektromagnetischen Erzeugen einer örtlichen elektrischen Impedanz in einem metallischen Rohrbereich (2) einer Förderleitung, **dadurch gekennzeichnet, dass** das Impedanz-Erzeugungsmittel abgestimmt ist oder abstimmbar ist, um eine Maximalimpedanz für Signale bei einer ausgewählten Frequenz zu erzeugen, und das einen im allgemeinen ringförmigen Bereich eines magnetischen Materials (51) zum Umgehen des Rohrbereichs aufweist, wobei eine Wicklung (52) auf dem ringförmigen Bereich des magnetischen Materials bereitgestellt ist und die Wicklung mit mindestens einer Impedanz-Komponente (53) verbunden ist, die so ausgewählt ist, dass die Impedanz, die in einem Rohrbereich erkannt wird, der durch den ringförmigen Bereich des magnetischen Materials (51) läuft, mit der Frequenz variiert.

2. Erzeugungsmittel von elektrischer Impedanz in einer Förderleitung gemäß Patentanspruch 1, in dem die Impedanz-Komponente (53) einen Kondensator umfasst, der mit der Wicklung in Reihe geschaltet ist.

3. Erzeugungsmittel von elektrischer Impedanz in einer Förderleitung gemäß Patentanspruch 2, in dem das Impedanz-Erzeugungsmittel eine Mehrzahl von Impedanz-Komponenten (53b, 53c) aufweist, die wahlweise mit der Wicklung elektrisch verbindbar sind, um eine Resonanzfrequenz des Systems zu ändern und somit die örtliche elektrische Impedanz abzustimmen.

4. Erzeugungsmittel von elektrischer Impedanz in einer Förderleitung gemäß Patentanspruch 1, das angeordnet ist, um am Rohrbereich (21) befestigt zu werden, so dass das Rohr ununterbrochen durch das oder vorbei am Impedanz-Erzeugungsmittel (5) laufen kann, wenn es installiert und in Verwendung ist.

5. Erzeugungsmittel von elektrischer Impedanz in einer Förderleitung gemäß einem der vorhergehenden Patentansprüche, das eine Steuereinheit (63) zum Steuern der Erzeugung der örtlichen elektrischen Impedanz umfasst.

6. Förderleitungskommunikationsvorrichtung zur Verwendung da, wo ein metallisches Rohr eines Förderleitungssystems in einem Signalweg verwendet wird, wobei die Vorrichtung ein Impedanz-Erzeugungsmittel (5) gemäß einem der Patentansprüche 1 bis 5 zum Erzeugen einer örtlichen elektrischen Impedanz in einem metallischen Rohrbereich (21) sowie eine Kommunikationseinheit (6) aufweist, die mindestens einen Transmitter zum Übertragen von Signalen in den Rohrbereich über die örtliche elektrische Impedanz oder einen Empfänger zum Empfangen von Signalen über die örtliche Impedanz von dem Rohr umfasst.

7. Förderleitungskommunikationsvorrichtung gemäß Patentanspruch 6, die eine Steuereinheit (63) zum Steuern des Impedanz-Erzeugungsmittels umfasst, um die örtliche elektrische Impedanz zu steuern.

8. Erzeugungsmittel von elektrischer Impedanz in einer Förderleitung gemäß Patentanspruch 5 oder Förderleitungskommunikationsvorrichtung gemäß Patentanspruch 7, in dem/der die Steuereinheit (63) angeordnet ist, um die Impedanz auf die Frequenz von gesendeten und/oder empfangenen Signalen abzustimmen.

9. Erzeugungsmittel von elektrischer Impedanz in einer Förderleitung gemäß Patentanspruch 5 oder Förderleitungskommunikationsvorrichtung gemäß Patentanspruch 7, in dem/der die Steuereinheit (63) angeordnet ist, um das Impedanz-Erzeugungsmittel (5) wahlweise einzuschalten und auszuschalten, um zu steuern, ob eine örtliche elektrische Impedanz erzeugt wird.

10. Förderleitungskommunikationsvorrichtung gemäß Patentanspruch 9, in der das Impedenz-Erzeugungsmittel (5) angeordnet ist, um eine Impedanz zu erzeugen, die abgestimmt ist oder abstimmbar ist auf die Frequenz der Signale, die über die örtliche Impedanz übertragen und/oder empfangen werden.

11. Förderleitungskommunikationsvorrichtung gemäß einem der Patentansprüche 7 bis 10, in der die Steuereinheit (63) angeordnet ist, um eine empfangene Signalstärke von dem Rohr oder die örtliche elektrische Impedanz in dem Rohr zu messen, und die angeordnet ist, um das Impedanz-Erzeugungsmittel (5) zu steuern, so dass bei der Signalfrequenz jeweils die Signalstärke oder Impedanz in Richtung eines Maximums tendiert.

12. Förderleitungskommunikationsvorrichtung gemäß einem der Patentansprüche 6 bis 11, die ein beabstandetes Paar elektrischer Kontakte (62) zum Kontaktieren mit dem Rohr umfasst, um so den Transmitter und/oder Empfänger über die örtliche Impedanz zu verbinden.

13. Eine Förderleitungsanordnung, die einen metallischen Rohrbereich und ein Impedanz-Erzeugungsmittel (5) gemäß einem der Patentansprüche 1 bis 5, 8 und 9 umfasst.

14. Eine Förderleitungskommunikationsanordnung, die eine Förderleitungskommunikationsvorrichtung gemäß einem der Patentansprüche 6 bis 12 und eine Rohrlänge umfasst.

15. Eine Förderleitungsanordnung gemäß Patentanspruch 13 oder eine Förderleitungskommunikationsanordnung gemäß Patentanspruch 14, in der das Impedanz-Erzeugungsmittel (5) an einem oder um ein Rohr befestigt ist, und in der eine Isolierung (111a) auf der äußeren Oberfläche des Rohrs in Bereichen beidseitig des Impedanz-Erzeugungsmittels (5) bereitgestellt ist oder, wo das Rohr, auf dem das Impedanz-Erzeugungsmittel befestigt ist, selbst innerhalb einer zweiten Rohrlänge bereitgestellt ist, ist die Isolierung zwischen den zwei Rohrlängen in Bereichen beidseitig des Impedanz-Erzeugungsmittels bereitgestellt.

16. Eine Förderleitungskommunikationsanordnung gemäß Patentanspruch 14 oder Patentanspruch 15, die zur Kommunikation zwischen einem metallischen Rohr in einem Hauptbohrloch und einem metallischen Rohr in einem seitlichen Bohrloch angeordnet ist, das nicht elektrisch mit dem metallischen Rohr in dem Hauptbohrloch verbunden ist.

17. Eine Förderleitungskommunikationsanordnung gemäß Patentanspruch 14 oder Patentanspruch 15, das zur Verwendung beim Bohrstangenprüfen angeordnet ist.

18. Eine Förderleitungsanordnung gemäß Patentanspruch 13, in der das Impedanz-Erzeugungsmittel (5) in einer Bohrlochinstallation bereitgestellt ist, die ein Kommunikationssystem aufweist, das angeordnet ist, um Signale bei einer vorbestimmten Frequenz zu übermitteln und eine Verbindungsleitung aufweist, die weg von einem Bohrlochkopf führt, wobei das Impedanz-Erzeugungsmittel um die Verbindungsleitung angeordnet ist.

19. Ein Förderleitungs-Energieübertragungs-Vorrichtungssatz, der eine Haupteinheit (307), die zum Anwenden von Energie auf ein metallisches Rohr eines Förderleitungssystems angeordnet ist, sowie mindestens eine andere Einheit (306) umfasst, die angeordnet ist, um Energie vom metallischen Rohr eines Förderleitungssystems zu entnehmen, wobei die mindestens eine andere Einheit ein Impedanz-Erzeugungsmittel gemäß einem der Patentansprüche 1 bis 5, 8 und 9 aufweist, um eine Impedanz zu erzeugen, über die Energie bei Verwendung entnommen werden kann.

20. Eine Förderleitungs-Energieübertragungsvorrichtung gemäß Patentanspruch 19, in der die Haupteinheit (307) angeordnet ist, um wahlweise Energiesignale mit einer von einer Mehrzahl von vordefinierten Frequenzen anzuwenden.

21. Eine Förderleitungs-Energieübertragungsvorrichtung gemäß Patentanspruch 20, in der eine Mehrzahl der anderen Einheiten (307) vorhanden ist, wobei jede von diesen eine zugewiesene vordefinierte Frequenz aufweist und jede angeordnet ist, um Energie nur zu entnehmen, wenn ein Signal mit der entsprechenden vordefinierten Frequenz an dieser Einheit erfasst wird.

22. Eine Förderleitungs-Energieübertragungsvorrichtung gemäß Patentanspruch 20, in der jede andere Einheit angeordnet ist, um das Impedanz-Erzeugungsmittel zu aktivieren, um die Entnahme von Energie bei Erfassung eines Signals mit einer entsprechenden vordefinierten Frequenz zu gestatten.

23. Eine Förderleitungs-Energieübertragungsvorrichtung gemäß einem der Patentansprüche 19 bis 22, in der die Haupteinheit (307) Energieerzeugungsmittel (308) aufweist.

24. Ein Förderleitungs-Energieübertragungssystem, das einen Förderleitungs-Energieübertragungs-Vorrichtungssatz gemäß einem der Patentansprüche 19 bis 23 sowie eine Förderleitung aufweist, an der der Vorrichtungssatz installiert ist.

25. Förderleitungs-Kommunikationsvorrichtung zur Verwendung da, wo ein metallisches Rohr eines Förderleitungssystems in einem Signalweg verwendet wird, wobei die Vorrichtung ein Erzeugungsmittel (5) von elektrischer Impedanz in einer Förderleitung gemäß Patentanspruch 1 sowie eine Kommunikationseinheit (6) umfasst, die mindestens einen Transmitter zum Übertragen von Signalen in die metallische Rohrlänge über einen Bereich des Rohrs, der durch den ringförmigen Bereich von magnetischem Material läuft, oder einen Empfänger zum Empfangen von Signalen von der metallischen Rohrlänge über einen Bereich des Rohrs aufweist, der durch den ringförmigen Bereich von magnetischem Material läuft.

26. Ein Schrägbohrloch-Kommunikationssystem zum Kommunizieren zwischen metallischem Rohr in einem Hauptbohrloch und metallischem Rohr in einem seitlichen Bohrloch, das nicht elektrisch mit dem metallischen Rohr in dem Hauptbohrloch verbunden ist, das Übertragungsmittel (4) zum Anwenden von Signalen auf das metallische Rohr in dem Hauptbohrloch aufweist, so dass Signale in die Umgebungsformation und in Richtung des seitlichen Bohrlochs laufen, sowie eine Förderleitungskommunikationsvorrichtung (6) gemäß Patentanspruch 25, die im seitlichen Bohrloch zur Entnahme von Signalen von dem Rohr im seitlichen Bohrloch bereitgestellt ist, wobei Signale im Rohr im seitlichen Bohrloch durch die Signale erzeugt wurden, die durch die Umgebungsformation laufen.

27. Ein Bohrstangen-Prüfsystem, das eine metallische Rohrlänge, einen Bohreinsatz, einen Schrägbohrlochsensor zum Erfassen eines Schrägbohrlochparameters sowie ein Kommunikationssystem zum Übertragen von Daten von dem Schrägbohrlochsensor zur Oberfläche aufweist, wobei das Kommunikationssystem eine Förderleitungskommunikationsvorrichtung (6) gemäß Patentanspruch 25 zum Einspeisen von Signalen, die die Daten darstellen, in das Bohrer-unterstützende metallische Rohr (111) zur Übermittlung in Richtung der Oberfläche aufweist.

## Revendications

1. Moyens de génération d'impédance électrique de ligne de courant (5) pour générer de façon électromagnétique une impédance électrique locale dans une partie de tubulure métallique (2) d'une ligne de courant, **caractérisés en ce que** les moyens de génération d'impédance sont ajustés ou ajustables pour générer une impédance maximale pour des signaux à une fréquence choisie, et comprennent une partie généralement toroïdale de matériau magnétique (51) pour entourer la partie de tubulure, un enroulement (52) étant disposé sur la partie toroïdale de matériau magnétique, et l'enroulement étant raccordé à au moins un composant d'impédance (53) qui est choisi de sorte que l'impédance observée dans une partie de tubulure traversant la partie toroïdale de matériau magnétique (51) varie avec la fréquence.

2. Moyens de génération d'impédance électrique de ligne de courant selon la revendication 1 dans lesquels le composant d'impédance (53) comprend un condensateur raccordé en série à l'enroulement.

3. Moyens de génération d'impédance électrique de ligne de courant selon la revendication 2, dans lesquels les moyens de génération d'impédance comprennent une pluralité de composants d'impédance (53b, 53c) qui sont sélectivement électriquement raccordables à l'enroulement pour modifier une fréquence de résonance du système et par conséquent, ajuster l'impédance électrique locale.

4. Moyens de génération d'impédance électrique de ligne de courant selon la revendication 1 qui sont agencés de manière à être montés sur la partie de tubulure (21) de sorte que la tubulure puisse s'étendre de façon ininterrompue à travers ou au-delà des moyens de génération d'impédance (5) lorsqu'ils sont installés et utilisés.

5. Moyens de génération d'impédance électrique de ligne de courant selon l'une quelconque des revendications précédentes qui comprennent une unité de commande (63) pour commander la génération de l'impédance électrique locale.

6. Appareil de communication par ligne de courant pour utilisation où la tubulure métallique d'un système de ligne de courant est utilisée dans un chemin de signal, l'appareil comprenant des moyens de génération d'impédance (5) selon l'une quelconque des revendications 1 à 5 pour générer une impédance électrique locale dans une partie de tubulure métallique (21) et une unité de communication (6) comprenant au moins l'un d'un émetteur pour transmettre des signaux dans la partie de tubulure par l'intermédiaire de l'impédance électrique locale et un récepteur pour recevoir des signaux par l'intermédiaire de l'impédance locale depuis la tubulure.

7. Appareil de communication par ligne de courant selon la revendication 6, qui comprend une unité de commande (63) pour commander les moyens de génération d'impédance de manière à réguler l'impédance électrique locale.

8. Moyens de génération d'impédance électrique de ligne de courant selon la revendication 5, ou appareil de communication par ligne de courant selon la revendication 7, dans lesquels l'unité de commande (63) est agencée de manière à ajuster l'impédance à la fréquence de signaux étant envoyés et/ou reçus.

9. Moyens de génération d'impédance électrique de ligne de courant selon la revendication 5 ou appareil de communication par ligne de courant selon la revendication 7, dans lesquels l'unité de commande (63) est agencée de manière à activer et désactiver sélectivement les moyens de génération d'impédance (5) afin de commander si une impédance électrique locale est générée.

10. Appareil de communication par ligne de courant selon la revendication 9 dans lequel les moyens de génération d'impédance (5) sont agencés pour générer une impédance qui est ajustée ou ajustable à la fréquence des signaux à transmettre et/ou recevoir par l'intermédiaire de l'impédance locale.

11. Appareil de communication par ligne de courant selon l'une quelconque des revendications 7 à 10, dans lequel l'unité de commande (63) est agencée pour mesurer l'un de : l'intensité de signal reçu depuis la tubulure et l'impédance électrique locale dans la tubulure, et agencée pour commander les moyens de génération d'impédance (5) de sorte qu'à la fréquence de signalisation, l'intensité du signal ou l'impédance tendent respectivement vers un maximum.

12. Appareil de communication par ligne de courant selon l'une quelconque des revendications 6 à 11 comprenant une paire espacée de contacts électriques (62) pour mise en contact avec la tubulure de manière à raccorder l'émetteur et/ou le récepteur par l'intermédiaire de l'impédance locale.

13. Agencement de ligne de courant comprenant une partie de tubulure métallique et des moyens de génération d'impédance (5) selon l'une quelconque des revendications 1 à 5, 8 et 9.

14. Agencement de communication par ligne de courant comprenant un appareil de communication par ligne de courant selon l'une quelconque des revendications 6 à 12 et une longueur de tubulure.

15. Agencement de ligne de courant selon la revendication 13 ou agencement de communication par ligne de courant selon la revendication 14, dans lequel les moyens de génération d'impédance (5) sont montés sur ou autour d'une tubulure, et une isolation (111a) est disposée sur la surface extérieure de la tubulure dans des régions sur les deux côtés des moyens de génération d'impédance (5) ou où la tubulure sur laquelle les moyens de génération d'impédance sont montés est elle-même disposée dans une deuxième longueur de tubulure, une isolation est disposée entre les deux longueurs de tubulure dans des régions sur les deux côtés des moyens de génération d'impédance.

16. Agencement de communication par ligne de courant selon la revendication 14 ou la revendication 15 disposé pour communiquer entre une tubulure métallique dans un forage principal et une tubulure métallique dans un côté latéral qui n'est pas électriquement raccordé à la tubulure métallique dans le forage principal.

17. Agencement de communication par ligne de courant selon la revendication 14 ou la revendication 15 disposé pour utilisation dans un essai aux tiges.

18. Agencement de ligne de courant selon la revendication 13, dans lequel les moyens de génération d'impédance (5) sont disposés dans une installation de puits comprenant un système de communication agencé pour transmettre des signaux à une fréquence prédéterminée et ayant un colonne de montée conduisant depuis une tête de puits, les moyens de génération d'impédance étant disposés autour de la colonne de montée.

19. Ensemble d'appareil de transmission d'énergie par ligne de courant comprenant une unité maîtresse (307) agencée pour appliquer de l'énergie à une tubulure métallique d'un système de ligne de courant et au moins une autre unité (306) agencée pour extraire l'énergie de la tubulure métallique d'un système de ligne de courant, l'au moins une autre unité comprenant des moyens de génération d'impédance selon l'une quelconque des revendications 1 à 5, 8 et 9, pour générer une impédance par l'intermédiaire de laquelle de l'énergie peut être extraite en utilisation.

20. Appareil de transmission d'énergie par ligne de courant selon la revendication 19 dans lequel l'unité maîtresse (307) est agencée pour appliquer sélectivement des signaux d'énergie ayant l'une d'une pluralité de fréquences prédéfinies.

21. Appareil de transmission d'énergie par ligne de courant selon la revendication 20 dans lequel il existe une pluralité desdites autres unités (307) dont chacune a une fréquence prédéfinie assignée et chacune étant agencée pour extraire de l'énergie uniquement lorsqu'un signal ayant la fréquence prédéfinie respective est détecté au niveau de cette unité.

22. Appareil de transmission d'énergie par ligne de courant selon la revendication 20 dans lequel chaque autre unité est agencée pour activer les moyens de génération d'impédance de manière à permettre l'extraction d'énergie lors de la détection d'un signal ayant une fréquence prédéfinie respective.

23. Appareil de transmission d'énergie par ligne de courant selon l'une quelconque des revendications 19 à 22, dans lequel l'unité maîtresse (307) comprend des moyens de génération de puissance (308).

24. Système de transmission d'énergie par ligne de courant comprenant un appareil de transmission d'énergie par ligne de courant défini selon l'une quelconque des revendications 19 à 23 et une ligne de courant sur laquelle l'ensemble d'appareil est installé.

25. Appareil de communication par ligne de courant pour utilisation dans lequel la tubulure métallique d'un système de ligne de courant est utilisée dans un chemin de signal, l'appareil comprenant des moyens de génération d'impédance électrique de ligne de courant (5) selon la revendication 1 et une unité de communication (6) comprenant au moins l'un d'un émetteur pour transmettre des signaux dans la longueur de tubulure métallique par l'intermédiaire d'une partie de tubulure traversant la partie toroïdale de matériau magnétique et un récepteur pour recevoir des signaux, depuis la longueur de tubulure métallique, par l'intermédiaire d'une partie de la tubulure traversant la partie toroïdale de matériau magnétique.

26. Système de communication de fond pour communication entre une tubulure métallique dans un forage principal et une tubulure métallique dans un forage latéral qui n'est pas électriquement raccordée à la tubulure métallique dans le forage principal, comprenant des moyens d'émission (4) pour appliquer des signaux à la tubulure métallique dans le forage principal de sorte que des signaux passent dans la formation environnante et vers le forage latéral et un appareil de communication par ligne de courant (6) selon la revendication 25 disposé dans le forage latéral pour extraire des signaux provenant de la tubulure dans le forage latéral, les signaux dans la tubulure dans le forage latéral ayant été générés par les signaux traversant la formation environnante.

27. Système d'essai aux tiges comprenant, une longueur de tubulure métallique soutenant un trépan, un capteur de fond pour détecter un paramètre de fond, et un système de communication pour transmettre des données depuis le capteur de fond vers la surface, le système de communication comprenant un appareil de communication par ligne de courant (6) selon la revendication 25 pour injecter des signaux représentant lesdites données dans la tubulure métallique (111) soutenant le trépan pour transmission vers la surface.
